# EUROPÄISCHE PATENTSCHRIFT

(11) **EP 0 958 992 B1**
(45) Veröffentlichungstag und Bekanntmachung des Hinweises auf die Patenterteilung: **20.07.2005**
(21) Anmeldenummer: 99104740.8
(22) Anmeldetag: 10.03.1999
(51) Int. Cl.: B62D 21/15, B60K 5/12, B60R 25/00

(54) **Sicherheitseinrichtung für Kraftfahrzeuge**
Safety device for a motor car
Dispositif de sécurité pour véhicules automobiles

(30) Priorität: 16.05.1998 DE 19822201
(43) Veröffentlichungstag der Anmeldung: 24.11.1999
(73) Patentinhaber: Dr.Ing. h.c.F. Porsche Aktiengesellschaft, 70435 Stuttgart (DE)
(72) Erfinder: Stromsky, Roland, 71691 Freiberg (DE)

(56) Entgegenhaltungen:
- DE-A- 3 801 347
- DE-A- 19 608 196

## Beschreibung

Die Erfindung betrifft eine Sicherheitseinrichtung nach dem Oberbegriff des Patentanspruchs 1. Eine derartige Sicherheitseinrichtung ist aus der DE 19608196 bekannt.

Weiterhin ist eine Sicherheitseinrichtung bekannt - US-PS 3 776 588 - , bei der eine Tür als Stützvorrichtung und ein Aufbau als Stoßaufnahmevorrichtung ausgebildet sind. Dabei wirken Rahmenteile der Tür und des Aufbaues mittels ineinandergreifender Abschnitte zusammen.

Dieser Ausführung haftet der Nachteil an, daß sie zur Begrenzung unfallbedingter Lageveränderungen eines Antriebsaggregates schwerlich geeignet sind.

Aufgabe der Erfindung ist es daher, an einem Kraftfahrzeug solche Vorkehrungen zu treffen, daß sein Antriebsaggregat bei auf es einwirkenden und zu Aufbauverformungen führenden Havariekräften bezüglich Relativbewegungen begrenzt ist.

Erfindungsgemäß wird diese Aufgabe durch die Merkmale des Patentanspruchs 1 gelöst. Weitere, die Erfindung ausgestaltenden Merkmale sind in den Unteransprüchen enthalten.

Die mit der Erfindung hauptsächlich erzielten Vorteile sind darin zu sehen, daß durch die Übertragungsglieder selbst und ihre besondere Anordnung eine wirkungsvolle Sicherheitseinrichtung geschaffen ist, die bei unfallbedingter Kräfteeinwirkung auf das Antriebsaggregat und darauf beruhender Deformation von Aufbaustrukturen Relativbewegungen des Antriebsaggregats begrenz. Dadurch wird einem Eindringen des Antriebsaggregats in den Fahrgastraum entgegengewirkt.

Die Übertragungsglieder sind einfache, jedoch hochbelastbare Bauteile, wie Zapfen, Rohrabschnitte oder dgl., die auf an sich vorhandene Fahrzeugkomponenten, z.B. steife Träger des Aufbaues oder mit dem Aufbau verbundener Fahrwerkaufnahmen ausgerichtet sind. Außerdem können mit den Übertragungsgliedern auch Nebeneinrichtungen - Gehäuse eines Umschlingungstriebs - gut gegen Beschädigungen geschützt werden. Schließlich wird mit der Fixierungseinrichtung ein unkontrolliertes Ausweichen des Antriebsaggregats - in Fahrzeughöhenrichtung gesehen - weitgehend vermieden.

In der Zeichnung wird ein Ausführungsbeispiel der Erfindung gezeigt, das nachstehend näher beschrieben ist.

Es zeigen:

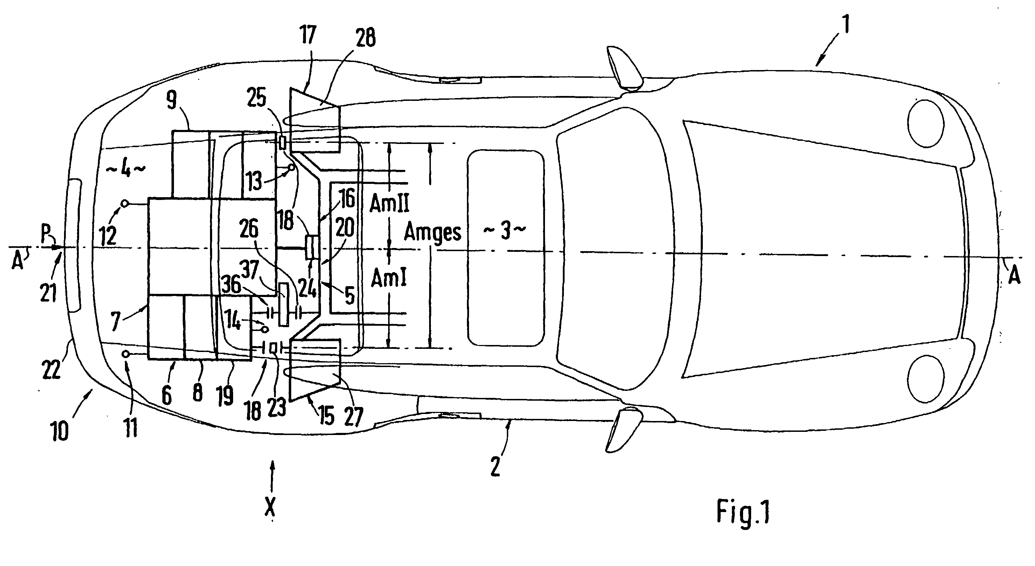

- Fig. 1: Eine schematische Ansicht von oben auf ein Kraftfahrzeug mit der erfindungsgemäßen Sicherheitseinrichtung,
- Fig. 2: eine Ansicht in Pfeilrichtung X der Fig. 1 in größerem Maßstab.

Ein Personenwagen 1 umfaßt einen Aufbau 2 mit einem Fahrgastraum 3 und einem Aggregatraum 4. Beide Räume 3 und 4 sind durch eine Querwand 5 voneinander getrennt. Im Aggregatraum 4 ist ein Antriebsaggregat 6 untergebracht, das durch eine Brennkraftmaschine 7 mit gegenüberliegende Zylinderreihen 8, 9 gebildet wird. Eine Längsmittellinie A-A des Personenkraftwagens 1 schließt eine Längsmittelebene - Kurbelwellenlängsachse - der Brennkraftmaschine 7 ein. Außerdem ist die Brennkraftmaschine 7 im Heck 10 des Personenwagens 1 an Lagern 11, 12, 13, 14 gehalten.

Zwischen der Brennkraftmaschine 7 und festen sowie steifen Fahrzeugkomponenten 15, 16, 17 ist eine Sicherheitseinrichtung 18 vorgesehen. Sie umfaßt eine Stoßaufnahmevorrichtung 19 in Gestalt der Brennkraftmaschine 7 und eine Stützvorrichtung 20 in Gestalt der Fahrzeugkomponenten 15, 16, 17. Die Stoßaufnahmevorrichtung 19 wird wirksam, wenn bei 21 eine havariebedingte definierte Kraft P an einem Stoßfänger 22 des Aufbaues 2 eingeleitet wird.

Zur gezielten Einleitung der Kraft P über die Stoßaufnahmevorrichtung 19 in die Stützvorrichtung 20 sind zwischen diesen beiden Vorrichtungen erste Übertragungsglieder 23, 24, 25 und zweite Übertragungsglieder 26 vorgesehen.

Die Übertragungsglieder 23 und 25 sind symmetrisch beiderseits der Längsmittelebene A-A angeordnet, was durch die Abstandsmaße Am I und Am II (Am I = Am II) verdeutlicht wird; das gesamte Abstandsmaß ist mit Amges bezeichnet. Darüber hinaus sind die Übertragungsglieder 23 und 25 auf steife Fahrwerksaufnahmen 27, 28 ausgerichtet, die fest mit dem Aufbau 2 verbunden sind und zur Befestigung von nicht näher gezeigten Radführungsgliedern dienen. Das Übertragungsglied 24 verläuft in der Längsmittelebene A-A und ist als Formschluss bewirkende Fixierungseinrichtung 29 ausgebildet. Sie stellt bei entsprechender Relativbewegung der Stoßaufnahmevorrichtung 19 bzw. der Brennkraftmaschine 7 - in Fahrzeuglängsrichtung B-B gesehen - sicher, daß letztere gezielt und weitgehend kontrolliert ihre Lage verändert. Die Fixierungseinrichtung 29 umfaßt eine Nut 31 und einen Zapfen 32, wobei im Ausführungsbeispiel der Zapfen 32 an einem Querträger 34 des Aufbaues 2 und die Nut 31 an einer mit der Brennkraftmaschine 7 fest verbundenen Tragvorrichtung 35 vorgesehen sind. Die Nut 31 und der Zapfen 32 weisen korrespondierene Abschnitte 31' und 32' auf.

Bei 36 ist eine Nebeneinrichtung 37 - z.B. Gehäuse eines Umschlingungstriebs - angedeutet, die dadurch geschützt wird, daß das zweite Übertragungsglied 26 vorgesehen ist. Das Übertragungsglied 26 ist in die Nebeneinrichtung 37 integriert und auf eine Stützerweiterung 38 der Brennkraftmaschine 7 und auf einen Querträger 34 des Aufbaues 2 ausgerichtet ist.

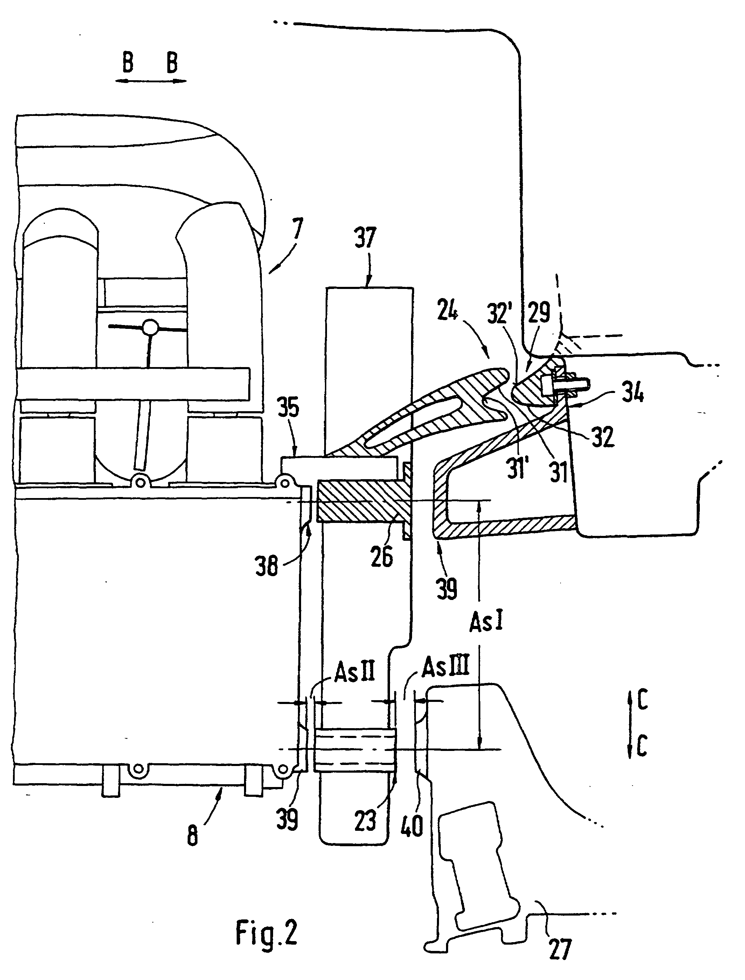

Gemäß Fig. 2 sind das Übertragungslied 23 und das Übertragungsglied 26 - in Fahrzeughöhenrichtung C-C gesehen - mit Abstand As I zueinander angeordnet, wobei das Übertragungsglied 23 ein Rohrabschitt und das Übertragungsglied 26 ein Zapfen ist. Zwischen dem Übertragungsglied 23 und einer Stützerweiterung 39 der Brennkraftmaschine 7 bzw. einer Stützerweiterung 40 der Fahrwerksaufnahme 27 ist jeweils ein Abstand As II bzw. As III vorgesehen.

## Patentansprüche

1. Sicherheitseinrichtung für Kraftfahrzeuge, insbesondere Personenkraftwagen, mit einer Stoßaufnahmevorrichtung und einer Stützvorrichtung, die bei unfallbedingter Einwirkung Relativbewegungen der Stoßaufnahmevorrichtung begrenzt, wobei die Stoßaufnahmevorrichtung an einem Antriebsaggregat, z.B. Brennkraftmaschine, und die Stützvorrichtung an festen sowie steifen Fahrzeugkomponenten vorgesehen sind, wobei zwischen der Stoßaufnahmevorrichtung (19) und den Fahrzeugkomponenten (15, 16, 17) erste Übertragungsglieder (23, 24, 25, 26) angeordnet sind, die sich in einer Längsmittelebene (A-A) des Personenwagens (1) und/oder der Brennkraftmaschine (7) bzw. beiderseits dieser Längsmittelebene (A-A) erstrecken und dass darüber hinaus zumindest ein Teil der ersten Übertragungsglieder (23,24,25 und 26) durch eine Formschluss bewirkende Fixierungseinrichtung (29) gebildet werden, **dadurch gekennzeichnet, dass** jede zur Festlegung der Höhenlage der Brennkraftmaschine (7) dienende Fixierungseinrichtung 29 eine Nut (31) und einen Zapfen (32) aufweist, die korrespondierende Abschnitte (31', 32') aufweisen.

2. Sicherheitseinrichtung nach Anspruch 1, **dadurch gekennzeichnet, daß** zwischen Brennkraftmaschine und den Fahrzeugkomponenten wenigstens eine Nebeneinrichtung vorgesehen ist, und daß ein zweites Übertragungsglied (26) zum Schutz der Nebeneinrichtung (37) vorgesehen ist.

3. Sicherheitseinrichtung nach Anspruch 2, **dadurch gekennzeichnet, daß** das zweite Übertragungsglied (26) in die Nebeneinrichtung (37) integriert ist.

4. Sicherheitseinrichtung nach einem oder mehreren der vorangehenden Ansprüche, **dadurch gekennzeichnet, daß** zwischen den Übertragungsgliedern (23) und der Brennkraftmaschine (7) bzw. den Fahrzeugkomponenten (15) Abstände (As II und As III) vorgesehen sind.

5. Sicherheitseinrichtung nach einem oder mehreren der vorangehenden Ansprüche, **dadurch gekennzeichnet, daß** die Fahrzeugkomponenten (15, 16, 17) durch steife Träger (Querträger 34) eines Aufbaues (2) des Personenwagens (1) und/oder Fahrwerkaufnahmen (27, 28) gebildet sind.

6. Sicherheitseinrichtung nach einem oder mehreren der vorangehenden Ansprüche, **dadurch gekennzeichnet, daß** zumindest ein Teil der Übertragungsglieder (23, 26) - in Fahrzeughöhenrichtung C-C gesehen - mit Abstand (As I) zueinander angeordnet sind.

7. Sicherheitseinrichtung nach einem oder mehreren der vorangehenden Ansprüche, **dadurch gekennzeichnet, daß** die Übertragungsglieder (23, 24, 25 und 26) durch Zapfen, Rohrabschnitte oder dgl. gebildet werden.

## Claims

1. A safety installation for motor vehicles, especially passenger vehicles, comprising an impact-absorbing device and a supporting device which limits relative movements of the impact-absorbing device in the event of an accident, wherein the impact-absorbing device is provided on a drive assembly, e.g. an internal-combustion engine, and the supporting device is provided on fixed and rigid vehicle components, wherein first transmission members (23, 24, 25, 26) are arranged between the impact-absorbing device (19) and the vehicle components (15, 16, 17) and extend in a longitudinal central plane (A-A) of the passenger vehicle (1) and/or the internal-combustion engine (7) or on either side of this longitudinal central plane (A-A), and furthermore wherein at least some of the first transmission members (23, 24, 25 and 26) are formed by a positive-locking fixing arrangement (29), **characterised in that** each fixing arrangement (29), which serves to secure the vertical position of the internal-combustion engine (7), comprises a groove (31) and a pin (32) with complementary portions (31', 32').

2. A safety installation according to claim 1, **characterised in that** at least one auxiliary installation is provided between the internal-combustion engine and the vehicle components, and **in that** a second transmission member (26) is provided for protection of the auxiliary installation (37).

3. A safety installation according to claim 2, **characterised in that** the second transmission member (26) is integrated into the auxiliary arrangement (37).

4. A safety installation according to one or more of the preceding claims, **characterised in that** spaces (As II and As III) are provided between the transmission members (23) and, respectively, the internal-combustion engine (7) and the vehicle components (15).

5. A safety installation according to one or more of the preceding claims, **characterised in that** the vehicle components (15, 16, 17) are formed by rigid members (cross members 34) of a body (2) of the passenger vehicle (1) and/or chassis mounts (27, 28).

6. A safety installation according to one or more of the preceding claims, **characterised in that** at least some of the transmission members (23, 26) are arranged with mutual spacing (As I) when viewed in the vertical direction of the vehicle C-C.

7. A safety installation according to one or more of the preceding claims, **characterised in that** the transmission members (23, 24, 25 and 26) are formed by pins, pipe sections or the like.

## Revendications

1. Dispositif de sécurité pour véhicules automobiles, en particulier pour voitures de tourisme, comportant un dispositif d'absorption des chocs et un dispositif d'appui qui en cas d'intervention occasionnée par un accident limite les mouvements relatifs du dispositif d'absorption des chocs, le dispositif d'absorption des chocs étant prévu sur un groupe moteur, par exemple le moteur à combustion interne, et le dispositif d'appui sur des composants fixes et rigides du véhicule, des premiers organes de transmission (23, 24, 25, 27) étant disposés entre le dispositif d'absorption des chocs (19) et les composants (15, 16, 17) du véhicule, lesquels organes de transmission s'étendent dans un plan médian longitudinal (A-A) de la voiture de tourisme (1) et/ ou du moteur à combustion interne (7) ou des deux côtés de ce plan médian longitudinal (A-A) et par ailleurs, au moins une partie des premiers organes de transmission (23, 24, 25 et 26) étant formée par un dispositif de fixation (29) provoquant une liaison par complémentarité de formes, **caractérisé en ce que** chaque dispositif de fixation (29), servant à la fixation de la position en hauteur du moteur à combustion interne (7), présente une rainure (31) et une languette (32) qui comportent des segments (31', 32') correspondants.

2. Dispositif de sécurité selon la revendication 1, **caractérisé en ce qu'**au moins un dispositif auxiliaire est prévu entre le moteur à combustion interne et les composants du véhicule et **en ce qu'**un deuxième organe de transmission (26) est prévu pour la protection du dispositif auxiliaire (37).

3. Dispositif de sécurité selon la revendication 2, **caractérisé en ce que** le deuxième organe de transmission (26) est intégré au dispositif auxiliaire (37).

4. Dispositif de sécurité selon une ou plusieurs des revendications précédentes, **caractérisé en ce que** des distances (As II et As III) sont prévues entre les organes de transmission (23) et le moteur à combustion interne (7) ou les composants (15) du véhicule.

5. Dispositif de sécurité selon une ou plusieurs des revendications précédentes, **caractérisé en ce que** les composants (15, 16, 17) du véhicule sont formés par des poutres rigides (traverse 34) d'une carrosserie (2) de la voiture de tourisme (1) et/ou des logements (27, 28) du châssis.

6. Dispositif de sécurité selon une ou plusieurs des revendications précédentes, **caractérisé en ce qu'**au moins une partie des organes de transmission (23, 26) - vu dans la direction de la hauteur du véhicule (C-C) - sont disposés à distance (As I) les uns des autres.

7. Dispositif de sécurité selon une ou plusieurs des revendications précédentes, **caractérisé en ce que** les organes de transmission (23, 24, 25 et 26) sont formés par des tiges, segments de tube ou similaires.
